# EUROPEAN PATENT SPECIFICATION

(11) **EP 2 727 366 B1**
(45) Date of publication and mention of the grant of the patent: **03.10.2018**
(21) Application number: 12839909.4
(22) Date of filing: 09.10.2012
(51) Int. Cl.: H04N 19/00, H04N 19/597

(54) **METHOD AND APPARATUS OF MOTION AND DISPARITY VECTOR DERIVATION FOR 3D VIDEO CODING AND HEVC**
VERFAHREN UND VORRICHTUNG ZUR ABLEITUNG VON BEWEGUNGS- UND DISPARITÄTSVEKTOREN FÜR 3D-VIDEOKODIERUNG UND HEVC
PROCÉDÉ ET APPAREIL DE DÉRIVATION DE VECTEUR DE MOUVEMENT ET DE VECTEUR DE DISPARITÉ POUR UN CODAGE VIDÉO 3D ET UN CODAGE HEVC

(30) Priority: 11.10.2011 US 201161545743 P; 23.11.2011 US 201161563341 P; 05.07.2012 US 201261668424 P
(43) Date of publication of application: 07.05.2014
(73) Proprietor: MediaTek Inc., Hsin-Chu 300, Taiwan (TW)
(72) Inventor: LIN, Jian-Liang, Su'ao Township Yilan County 270 (TW); CHEN, Yi-Wen, Taichung City 420 (TW); HUANG, Yu-Wen, Taipei City 104 (TW); LEI, Shaw-Min, Hsinchu County 302 (TW)
(74) Representative: Hoefer & Partner Patentanwälte mbB
(86) International application number: PCT/CN2012/082624
(87) International publication number: WO 2013/053309

(56) References cited:
- WO-A1-2008/029345
- CN-A- 101 023 676
- CN-A- 101 512 601
- CN-A- 102 017 627
- US-A1- 2007 291 850
- US-A1- 2011 211 638
- HEIKO SCHWARZ ET AL: "3D-HEVC-CE3 results on inter-view motion parameter prediction by HHI", 99. MPEG MEETING; 6-2-2012 - 10-2-2012; SAN JOSÃ CR ; (MOTION PICTURE EXPERT GROUP OR ISO/IEC JTC1/SC29/WG11),, no. m23698, 30 January 2012 (2012-01-30), XP030052223,
- JIAN-LIANG LIN ET AL: "3D-CE5.a related: Simplification on the disparity vector derivation for AVC-based 3D video coding", 1. JCT-3V MEETING; 101. MPEG MEETING; 16-7-2012 - 20-7-2012; STOCKHOLM; (THE JOINT COLLABORATIVE TEAM ON 3D VIDEO CODING EXTENSION DEVELOPMENT OF ISO/IEC JTC1/SC29/WG11 AND ITU-T SG.16 ); URL: HTTP://PHENIX.INT-EVRY.FR/JCT2/,, no. JCT3V-A0046, 10 July 2012 (2012-07-10) , XP030130045,
- JIAN-LIANG LIN ET AL: "3D-CE5.h related: Simplification on disparity vector derivation for HEVC-based 3D video coding", 1. JCT-3V MEETING; 101. MPEG MEETING; 16-7-2012 - 20-7-2012; STOCKHOLM; (THE JOINT COLLABORATIVE TEAM ON 3D VIDEO CODING EXTENSION DEVELOPMENT OF ISO/IEC JTC1/SC29/WG11 AND ITU-T SG.16 ); URL: HTTP://PHENIX.INT-EVRY.FR/JCT2/,, no. JCT3V-A0047, 10 July 2012 (2012-07-10) , XP030130046,

## Description

### CROSS REFERENCE TO RELATED APPLICATIONS

The present invention claims priority to U.S. Provisional Patent Application, Serial No. 61/545,743, filed on October 11, 2011, entitled "Method for generating additional candidates using truncation or offset", U.S. Provisional Patent Application, Serial No. 61/ 563,341, filed on November 23, 2011, entitled "Method for Generating Additional Candidates Using Adaptive Offset " and U.S. Provisional Patent Application, Serial No. 61/ 668,424, filed on July 5, 2012, entitled " Disparity vector derivation for inter-view predictor in ATM".

### TECHNICAL FIELD

The present invention relates to video coding. In particular, the present invention relates to motion/disparity vector derivation for 3D video coding and High Efficiency Video Coding (HEVC) according to the pre-characterizing parts of independent claims 1 and 4. Corresponding methods are disclosed in WO 2008/029345 A1 and HEIKO SCHWARZ ET AL: "3D-HEVC-CE3 results on inter-view motion parameter prediction by HHI", 99. MPEG MEETING; 6-2-2012 - 10-2-2012; SAN JOSA CR ; (MOTION PICTURE EXPERT GROUP OR ISO/IEC JTC1/SC29/WG11), no. m23698, 30 January 2012 (2012-01-30), XP030052223.

### BACKGROUND

Three-dimensional (3D) television has been a technology trend in recent years that is targeted to bring viewers sensational viewing experience. Multi-view video is a technique to capture and render 3D video. The multi-view video is typically created by capturing a scene using multiple cameras simultaneously, where the multiple cameras are properly located so that each camera captures the scene from one viewpoint. The multi-view video with a large number of video sequences associated with the views represents a massive amount data. Accordingly, the multi- view video will require a large storage space to store and/or a high bandwidth to transmit. Therefore, multi-view video coding techniques have been developed in the field to reduce the required storage space and the transmission bandwidth. A straightforward approach may simply apply conventional video coding techniques to each single-view video sequence independently and disregard any correlation among different views. Such straightforward techniques would result in poor coding performance. In order to improve multi-view video coding efficiency, multi-view video coding always exploits inter-view redundancy. The disparity between two views is caused by the locations and angles of the two respective cameras. The disparity model, such as an affine model, is used to indicate the displacement of an object in two view frames. Furthermore, motion vector for frames in one view can be derived from the motion vector for respective frames in another view.

For 3D video, besides the conventional texture data associated with multiple views, depth data is often captured or derived as well. The depth data may be captured for video associated with one view or multiple views. The depth information may also be derived from images of different views. The depth data is usually represented in lower spatial resolution than the texture data. The depth information is useful for view synthesis and inter-view prediction.

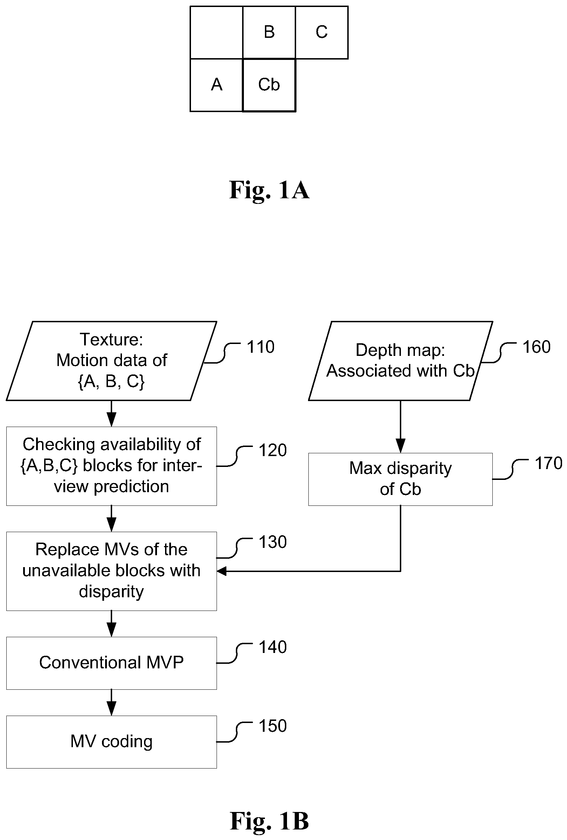

Some standard development activities for 3D video coding have been undertaken by Joint Collaborative Team on 3D Video Coding Extension Development of ITU-T SG 16 WP 3 and ISO/IEC JTC 1/SC 29/WG 11. Furthermore, a software platform has been developed as a test bed for the above standard development. In the software test model version 0.4 of 3D video coding for AVC (3DV-ATM v.4, http://mpeg3dv.research.nokia.com/svn/mpeg3dv/trunk), the direction-separated motion vector prediction is utilized for the temporal and inter-view motion vector predictions in the Inter mode. The motion vector for a current block can be predicted based on motion vector prediction, the candidate motion vectors associated with neighboring blocks are used for motion vector prediction. Fig. 1A illustrates an example of MVP (motion vector predictor) derivation based on neighboring blocks, where block Cb corresponds to a current block and blocks A, B and C correspond to three spatially neighboring blocks. If the target reference picture is a temporal prediction picture, the motion vectors of the spatially neighboring blocks (i.e., blocks A, B, and C) are provided and the motion vectors are derived based on the texture data of respective blocks. If a temporal motion vector for the neighboring block is unavailable, a zero vector is used as the MV (motion vector) candidate. The temporal motion vector prediction is then derived based on the median of the motion vectors of the adjacent blocks A, B, and C.

On the other hand, if the target reference picture is an inter-view prediction picture, the inter-view motion vectors of the neighboring blocks are used to derive the inter-view motion vector predictor. In block 110 of Fig. 1B, interview motion vectors of the spatially neighboring blocks are derived based on the texture data of respective blocks. The depth map associated with the current block Cb is also provided in block 160. The availability of inter-view motion vector for blocks A, B and C is checked in block 120. If an inter-view motion vector is unavailable, the disparity vector for the current block is used to replace the unavailable inter-view motion vector as shown in block 130. The disparity vector is derived from the maximum depth value of the associated depth block as shown in block 170. The median of the inter-view motion vectors of blocks A, B and C is used as the inter-view motion vector predictor. The conventional MVP procedure, where a final MVP is derived based on the median of the motion vectors of the inter-view MVPs or temporal MVPs as shown in block 140. Motion vector coding based on the motion vector predictor is performed as shown in block 150.

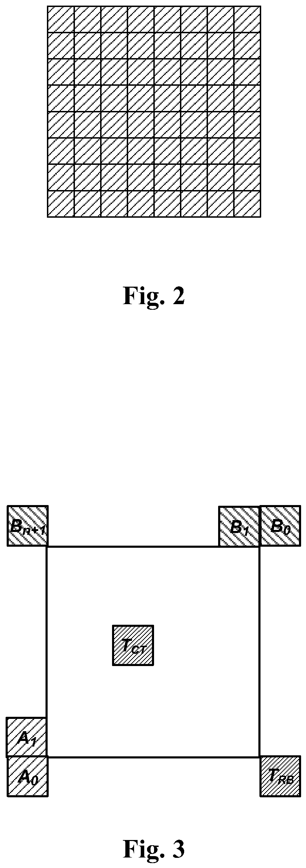

Fig. 2 illustrates an exemplary disparity vector derivation based on a depth map associated with a current block Cb according to 3DV-ATM v.4. The shaded samples are used to derive the disparity vector. As shown in Fig. 2, all depth samples in the depth block associated with the current block are used for disparity vector derivation. According to 3DV-ATM v.4, the disparity vector is derived based on the maximum depth value of the depth block. Though the depth map associated with a block usually has a lower spatial resolution than the texture data, the block size of the depth data may still be sizeable. For example, the depth map shown in Fig. 2 has a resolution of 8x8 samples, where the maximum depth value has to be determined from the 64 depth values. It is desirable to develop a scheme that can reduce the complexity of disparity vector derivation from the depth data while retaining the performance as much as possible.

In the MVP derivation for the HEVC-based 3D video coding, the interview motion vector further joins the spatial/temporal motion vectors as an additional candidate for derivation of motion vector prediction. The motion vector prediction using spatial and temporal motion vectors associated with neighboring blocks as candidates has been used by the High-Efficiency Video Coding (HEVC) system to increase the coding efficiency of motion vector coding. There are three inter-prediction modes including Inter, Skip, and Merge in the HEVC test model version 3.0 (HM-3.0). The Inter mode performs motion-compensated prediction and transmits motion vector differences (MVDs) that can be used together with MVPs for deriving motion vectors (MVs). On the other hand, the Skip and Merge modes utilize motion inference methods (MV=MVP+MVD where MVD is zero) to obtain the motion information. The motion vector candidates include motion vectors corresponding to spatially neighboring blocks (spatial candidates) and a temporal block (temporal candidate) located in a co-located picture. The co-located picture can be the first reference picture in list 0 or list 1, as signaled in the slice header.

In HEVC, the picture is divided into prediction units (PU) and each PU is processed according to a prediction mode. When a PU is coded in either Skip or Merge mode, no motion information is transmitted except for the index of the selected MVP. For a Skip PU, the residual signal is also omitted. For the Inter mode in HM-3.0, the advanced motion vector prediction (AMVP) scheme is used to select one MVP among one MVP list including two spatial MVPs and one temporal MVP. As for the Skip and Merge modes in HM-3.0, the Merge scheme is used to select one MVP among the MVP list containing four spatial MVPs and one temporal MVP.

For the Inter mode, the reference index is explicitly transmitted to the decoder when there are multiple reference pictures. The MVP is then selected from the MVP list for a given reference index. As shown in Fig. 3, the MVP list for the Inter mode in HM-3.0 includes two spatial MVPs and one temporal MVP:
- Left predictor (the first available one from A₀ and A₁)
- Top predictor (the first available one from B₀, B₁, and Bₙ₊₁)
- Temporal predictor (the first available one from T_{BR} and T_{CTR})

A temporal predictor is derived from a block (T_{BR} or T_{CTR}) located in a co-located picture, where the co-located picture is the first reference picture in list 0 or list 1. The block associated with the temporal MVP may have two MVs: one MV from list 0 and one MV from list 1. The temporal MVP is derived from the MV from list 0 or list 1 according to the following rule:
- The MV that crosses the current picture is chosen first.
- If both MVs cross the current picture or both do not cross, the one with the same reference list as the current list will be chosen.

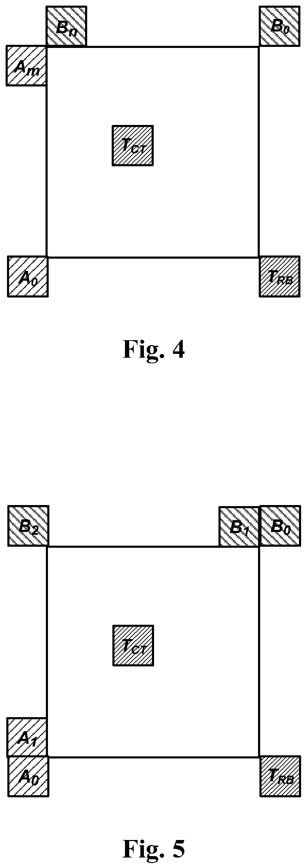

In HM-3.0, if a block is encoded as Skip or Merge mode, an MVP index is signaled to indicate which MVP among the MVP list is used for this block to be merged. Accordingly, each merged PU reuses the MV, prediction direction, and reference index of the selected MVP as indicated by the MVP index. It is noted that if the selected MVP is a temporal MVP, the reference index is always set to the reference picture which is referred most by neighboring PUs. As shown in Fig. 4, the MVP list includes four spatial MVPs and one temporal MVP:
- Left predictor (Aₘ)
- Top predictor (Bₙ)
- Temporal predictor (the first available one from T_{BR} and T_{CTR})
- Above right predictor (B₀)
- Below left predictor (A₀)

In HM-3.0, a procedure is utilized in Inter, Skip, and Merge modes to avoid an empty MVP list. According to this procedure, a zero MVP is added to the MVP list when no MVP can be inferred in Inter, Skip, or Merge mode.

Based on the rate-distortion optimization (RDO) decision, the encoder selects one final MVP for Inter, Skip, or Merge modes from the given MVP list and transmits the index of the selected MVP to the decoder after removing redundant MVPs in the list. However, because the temporal MVP is included in the MVP list, any transmission error may cause parsing errors at the decoder side and the error may propagate. When an MV of a previous picture is decoded incorrectly, a mismatch between the MVP list at the encoder side and the MVP list at the decoder side may occur. Therefore, subsequent MV decoding may also be impacted and the condition may persist for multiple subsequent pictures.

In HM-4.0, in order to solve the parsing problem related to Merge/AMVP in HM-3.0, fixed MVP list size is used to decouple MVP list construction and MVP index parsing. Furthermore, in order to compensate the coding performance loss caused by the fixed MVP list size, additional MVPs are assigned to the empty positions in the MVP list. In this process, Merge index is coded using truncated unary codes of fixed length equal to 5 or less, and AMVP index is coded using fixed length equal to 2 or less. Another change in HM-4.0 is the unification of MVP positions. Both Merge and Skip use the same positions shown in Fig. 5.

Additional bi-predictive Merge candidates are created using original Merge candidates. The additional candidates are divided into three candidate types:
- Combined bi-predictive Merge candidate (candidate type 1)
- Scaled bi-predictive Merge candidate (candidate type 2)
- Zero vector Merge/AMVP candidate (candidate type 3)

For Merge mode in HM-4.0, as shown in Fig. 5, up to four spatial MVPs are derived from A₀, A₁, B₀ and B₁, and one temporal MVP is derived from T_{BR} or T_{CTR} (T_{BR} is used first and T_{CTR} is used instead if T_{BR} is not available). If any of the four spatial MVPs is not available, the position B₂ is then used to derive MVP as a replacement. The order of the candidate list for Merge mode is A₁, B₁, B₀, A₀, (B₂), and temporal MVP. After the derivation process of the four spatial MVPs and one temporal MVP, removing redundancy is applied to remove redundant MVPs. If after removing redundancy, the number of available MVPs is smaller than five, three types of additional candidates listed above are derived and are added to the candidates list.

In Merge mode, in order to avoid imitation, for the second PU of 2NxN or Nx2N Merge mode, those MVPs which make this 2NxN or Nx2N PU merge as a 2Nx2N PU are removed by comparing the values of MVs. For the fourth PU in NxN Merge mode, those MVPs which cause this NxN merge as one of 2Nx2N, 2NxN or Nx2N PU are also removed by comparing the values of MVs.

While methods of generating additional MV candidates have been disclosed in HM-4.0, it is desirable to develop other effective methods of generating additional MV candidates for MVP derivation.

### SUMMARY

The invention is set out in the appended set of claims; the further examples called embodiments in the description are illustrative examples, not embodiments claimed in the present application. Embodiments according to the present invention derives a disparity vector from depth data of a depth block, wherein the depth data corresponds to a subset of the depth block and the subset contains a depth sample or a plurality of depth samples less than an entire depth block and the subset excludes a case that consists of a single depth sample corresponding to a center depth sample of the depth block. In one embodiment, the subset corresponds to four corner samples, two lower corner samples, or one middle sample of a bottom row of the depth block. The disparity vector can be derived based on maximum, minimum, average, median, most frequent, or linear combination of depth values of the subset. The subset can be derived from the depth block using spatial subsampling or cropping.

A method and apparatus for deriving MVP (motion vector predictor) for a block of a picture for three-dimensional video coding or multi-view video coding are disclosed. Embodiments according to the present invention replace an unavailable inter-view MV of one neighboring block with a disparity vector derived from depth data of a subset of a depth block corresponding to the current block or one neighboring block. The subset contains a depth sample or a plurality of depth samples less than an entire depth block. In some embodiments, the subset corresponds to four corner samples, two lower corner samples, or one middle sample of a bottom row of the depth block, or a single depth sample corresponding to a center depth sample of the depth block. The disparity vector can,be derived based on maximum, minimum, average, median, most frequent, or linear combination of depth values of the subset. In one embodiment, the subset corresponds to four corner samples of the depth block and the disparity vector is derived based on maximum of depth values of the subset. The subset can be derived from the depth block using spatial subsampling or cropping.

A method and apparatus for generating additional candidates for motion vector prediction associated with Merge mode or Inter mode for a block of a current picture are disclosed. Embodiments according to the present invention generate one or more additional MVP candidates to add to the MVP list if the MVP list size is less than a given list size, wherein said one or more additional MVP candidates are generated either by reducing precision of an available MVP in the MVP list or by adding an offset to the available MVP in the MVP list. Precision reduction can be applied to the x-component, the y-component, or both the x-component and the y- component of an available MVP. Precision reduction can be achieved by truncating or rounding. The offset can be determined by scaling the available MVP selected for generating one or more additional MVP candidates. The offset can be derived from the difference of one available MVP selected for generating one or more additional MVP candidates and another available MVP in the same reference picture list.

### BRIEF DESCRIPTION OF DRAWINGS

Fig. 1A illustrates an example of neighboring blocks used to derive motion vector predictors for a current block.
Fig. 1B illustrates an example of direction-separated motion vector prediction for the Inter mode, where an unavailable inter-view motion vector is replaced by a disparity vector and the disparity vector is determined based on all depth samples of the current block.
Fig. 2 illustrates an example of disparity vector derivation based on all depth samples of an 8x8 depth block.
Fig. 3 illustrates an example of Motion Vector Predictor (MVP) candidate set for Inter mode in HM-3.0.
Fig. 4 illustrates an example of Motion Vector Predictor (MVP) candidate set for Merge mode in HM-3.0.
Fig. 5 illustrates an example of unified Motion Vector Predictor (MVP) candidate set for Inter and Merge modes in HM-4.0.
Fig. 6 illustrates an example of disparity vector derivation based on four corner depth samples according to an embodiment of the present invention.
Fig. 7A illustrates an example of disparity vector derivation based a middle depth sample in the bottom row of the depth block according to an embodiment of the present invention.
Fig. 7B illustrates an example of disparity vector derivation based on two corner depth samples in the bottom row of the depth block according to an embodiment of the present invention.
Fig. 8 illustrates an example of generating four additional MVP candidates by adding an offset to an available MVP according to an embodiment of the present invention.
Fig. 9 illustrates another example of generating four additional MVP similar to Fig. 8, where a different order associated with the four candidates is used.
Fig. 10 illustrates an example of generating four additional MVP candidates by adding an offset to an available MVP according to an embodiment of the present invention, where one additional MVP candidate includes both x-component and y-component offsets.

### DETAILED DESCRIPTION

In the present invention, an efficient method of deriving a disparity vector for a block from the depth data of the block. As shown in Fig. 2, the method according to 3DV-ATM v.4 derives the disparity vector based on the maximum disparity value of all depth samples within the depth block corresponding to the current block. In 3DV-ATM v.4, the largest partition size is 16x16 and therefore the associated depth block can be also as large as 16x16. To find out the maximum depth value, it needs to access 256 depth samples within the associated depth block and perform 255 comparisons.

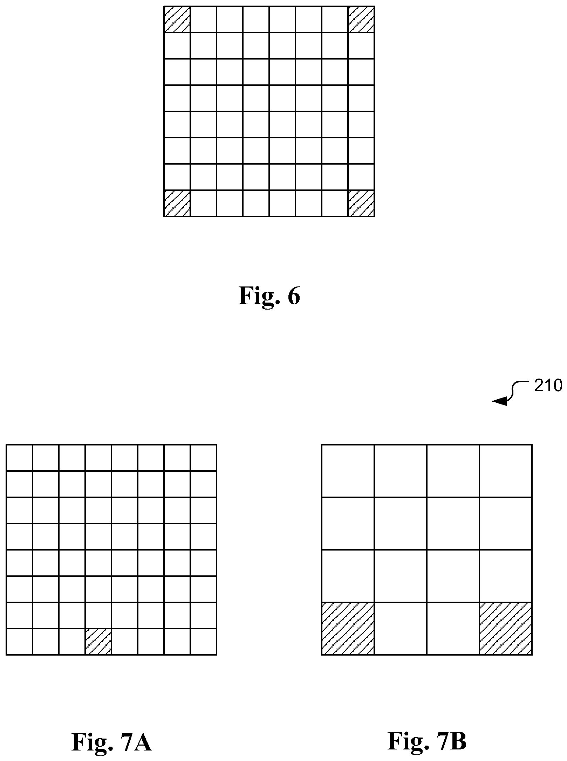

An embodiment according to the present invention discloses an efficient method for deriving the disparity vector. The disparity vector is derived from the maximum depth value of four corner depth samples as shown in Fig. 6 instead of all depth samples within the depth block corresponding to the current block. Based on the above method, it only needs to access 4 depth samples and perform 3 comparisons, which is much more efficient than the conventional method that uses all depth sample of the associated block.

Compared to 3DV-ATM v.4, the number of the depth samples to be accessed is reduced from 256 to 4 and the number of the required comparisons is reduced from 255 to 3 for the case of 16x16 macroblock partition. While the method of disparity vector derivation according to the present invention substantially reduces required data access and computations, the method maintains about the same performance as the convention system. Performance comparisons are shown in Table 1, where a system based on 3DV-ATM v.4 is used as a reference. The value, "dBR" corresponds to the difference in bitrate expressed in percentage (%), where a negative value means reduced bitrate compared to the reference system. The value, "dPSNR" corresponds to the difference in peak signal-to-noise ratio (PSNR) expressed in decibel (dB), where a positive value means improved PSNR. The comparisons are based on different test video sets (S01-S08). As shown in Table 1, the method according to the present invention achieves the same PSNR at lower average bitrates for texture coding, texture and depth coding and synthesized video.

**Table 1.**

| | Texture Coding | | Total (Coded PSNR) | | Total (Synthesized PSNR) | |
|---|---|---|---|---|---|---|
| | dBR, % | dPSNR, dB | dBR, % | dPSNR, dB | dBR, % | dPSNR, dB |
| S01 | -0.08 | 0.00 | -0.07 | 0.00 | -0.03 | 0.00 |
| S02 | 0.05 | 0.00 | 0.05 | 0.00 | 0.03 | 0.00 |
| S03 | 0.00 | 0.00 | 0.00 | 0.00 | 0.02 | 0.00 |
| S04 | 0.00 | 0.00 | 0.00 | 0.00 | -0.01 | 0.00 |
| S05 | -0.07 | 0.00 | -0.07 | 0.00 | -0.08 | 0.00 |
| S06 | -0.04 | 0.00 | -0.03 | 0.00 | -0.03 | 0.00 |
| S08 | -0.02 | 0.00 | -0.02 | 0.00 | -0.02 | 0.00 |
| Average | **-0.02** | **0.00** | **-0.02** | **0.00** | **-0.02** | **0.00** |

While the example according to the present invention derives the disparity vector using four corner depth samples as shown in Fig. 6, the present invention can also be practiced using any subset of the depth block. For example, Fig. 7A illustrates an example that the subset contains only one depth sample from the middle of a bottom row. Fig. 7B illustrates another example, where the subset contains two end samples of a bottom row. The subset may contain a depth sample or a plurality of depth samples less than an entire depth block. Spatial sub-sampling or cropping may be used to form the subset. For example, the subset may consist of every fourth horizontal samples and every fourth vertical samples of the depth block (i. e., 16:1 subsampling). Furthermore, while the depth map corresponding to the current block is used to derive the disparity map, the depth map corresponding to the neighboring block with an unavailable inter-view prediction vector may also be used to derive the disparity map.

While the maximum depth value of the subset is selected as the disparity vector, other means may also be used to derive the disparity vector. For example, minimum, average, median, most frequent, or linear combination of depth values of samples within the subset can also be used as the disparity vector.

While the example of deriving disparity vector using a subset of a depth block is illustrated for a specific application to replace an unavailable inter-view prediction vector, the method can be applied to various applications where a disparity vector is derived from depth data. Embodiments according to the present invention derives a disparity vector from the depth data, where the depth data corresponds to a subset of the depth block and the subset contains a depth sample or a plurality of depth samples less than an entire depth block and the subset excludes a case that consists of a single depth sample corresponding to a center depth sample of the depth block. The derived disparity vector can be used for inter-view processing of texture data of the picture. The subset may correspond to four corner samples, two lower corner samples, or one middle sample of a bottom row of the depth block. When the subset comprises two or more depth samples, the disparity vector is derived based on maximum, minimum, average, median, most frequent, or linear combination of depth values of the subset. The subset can be derived from the depth block using spatial subsampling or cropping.

Embodiments of the present invention also provide means for deriving additional candidates as a replacement of the redundant candidate or the empty positions in the candidate list for AMVP (Inter) mode or Merge mode by modifying the x-component, y-component, or both the x-component and y-component of a motion vector corresponding to one or more available MVP in the MVP list. In one embodiment, one or more additional MVP candidates are generated by reducing precision of one or more motion vectors corresponding to one or more available MVP in the MVP list. The precision reduction can be applied to the x-component, y-component or both the x-component and y-component of the motion vector selected for generating one or more MV candidates. In newer coding systems such as H.264/AVC or the emerging HEVC, the motion vector is often represented in subpixel resolution, such as 1/4 pixel or 1/8 pixel. An embodiment of the present invention reduces the precision so that the modified MV only supports integer precision. The specific examples of precision reduction mentioned above are intended for illustration purpose and shall not be construed as limitations of the present invention. For example, if 1/8-pixel resolution is used, the modified MV with reduced precision may support 1/2-pixel resolution to practice the present invention. There are various means to reduce precision of a digital data. For example, data truncation may be used to reduce precision. Alternatively, data rounding may be used to reduce precision. In one example, an MV with fractional-pixel resolution can be converted to integer-pixel resolution using truncation or rounding.

In another embodiment, one or more additional MV candidates are generated by adding an offset to one or more motion vectors corresponding to one or more available MVP in the MVP list. The offset can be added to the x-component, y-component or both the x-component and y-component of the motion vector selected for generating one or more MV candidates. In one embodiment of the present invention, the offset vector *Vₓ* for the x-component is derived from the difference of the x-components of two motion vector candidates (MVP A and MVP B) in a MVP list, where motion vector candidate MVP A is the MV candidate selected to generate additional MV candidates and MVP B is another MV candidate in the same reference list (i.e., list 0 or list 1). Similarly, the offset vector *V_{y}* for the y-component can be derived from the difference of the y-components of MVP A and MVP B. In case that MVP B does not exist, a pre-defined offset *Vₓ* or *V_{y}* (e.g., 1, 4 or 8 quarter-pixels) can be used. The averaging process may use truncation or rounding to cause the calculated offset to have the same precision as the MV candidate selected (i.e., MVP A).

In another embodiment of the present invention, the offset vectors *Vₓ* and *V_{y}* are derived from the selected MVP candidate in either list 0 or list 1 to generate additional MVP candidates. The offset vectors *Vₓ* and *V_{y}* can be derived based on the respective x-component and y-component magnitudes of the selected MVP candidate. For example, a scaling factor 1/4 may be selected and the offset vectors *Vₓ* and *V_{y}* become 1/4*(*MVₓ*, 0) and 1/4*(0, *MV_{y}*) respectively, where *MVₓ* is the x-component and *MV_{y}* is the y-component of the selected MVP candidate. The scaling process may use truncation or rounding to cause the calculated offset to have the same precision as the MVP candidate selected.

In one embodiment, the additional MVPs are generated by adding an offset symmetrically to a motion vector selected for generating one or more MVP candidates. For example, an x-component offset, *Vₓ* and a y-component MV offset, *V_{y}* can be added to an *MV₀* selected to generate four additional MV candidates in the following order:
1. 1^{st} additional candidate = *MV₀* + *Vₓ*,
2. 2^{nd} additional candidate = *MV₀* - *Vₓ*,
3. 3^{rd} additional candidate = *MV₀* + *V_{y}*, and
4. 4^{th} additional candidate = *MV₀* - *V_{y}*

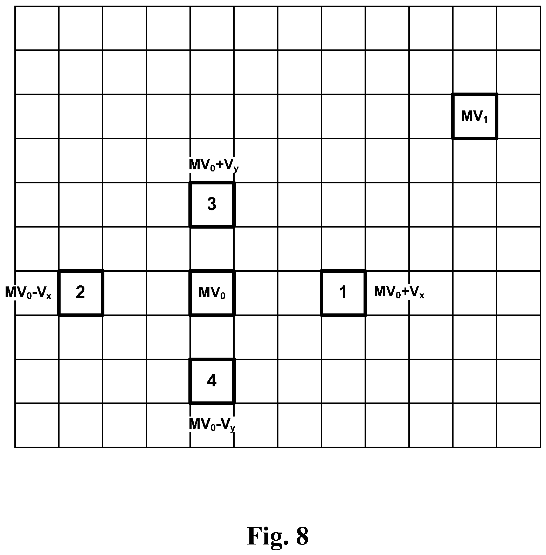

The derived additional MV candidates according to the above order are shown in Fig. 8. MV candidate *MV₁* in Fig. 8 represents the other MV candidate in the same reference list that may be used with the *MV₀* to generate the offset. Other ordering of the derived additional MVP candidates can be used. For example, the same four derived additional MVP candidates may be ordered differently according to:
1. 1^{st} additional candidate = *MV₀* + *Vₓ*,
2. 2^{nd} additional candidate = MV₀ + *V_{y}*,
3. 3^{rd} additional candidate = MV₀ - *Vₓ*, and
4. 4^{th} additional candidate = MV₀ - *V_{y}*

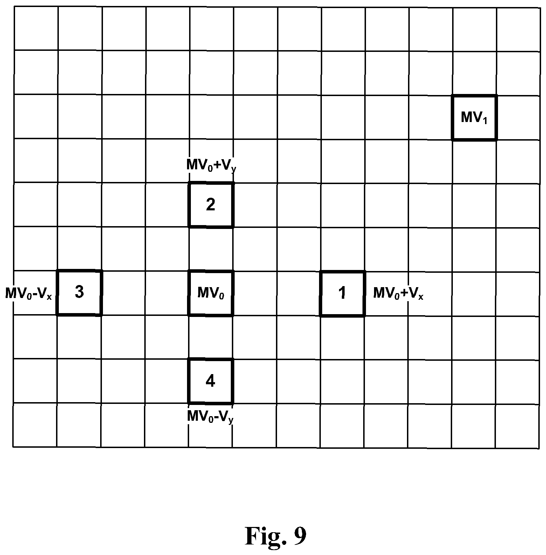

The derived additional MVP candidates according to above order are shown in Fig. 9. While Fig. 8 and Fig. 9 illustrate examples that the offset is applied to the x-component only or the y-component only, the offset may also be applied to both x-component and y-component. For example, another embodiment generates four additional MVP candidates in the following order:
1. 1^{st} additional candidate = *MV₀* + *Vₓ* + *V_{y}*,
2. 2^{nd} additional candidate = MV₀ + *Vₓ*,
3. 3^{rd} additional candidate = MV₀ + *V_{y}*, and
4. 4^{th} additional candidate = MV₀ - *Vₓ*

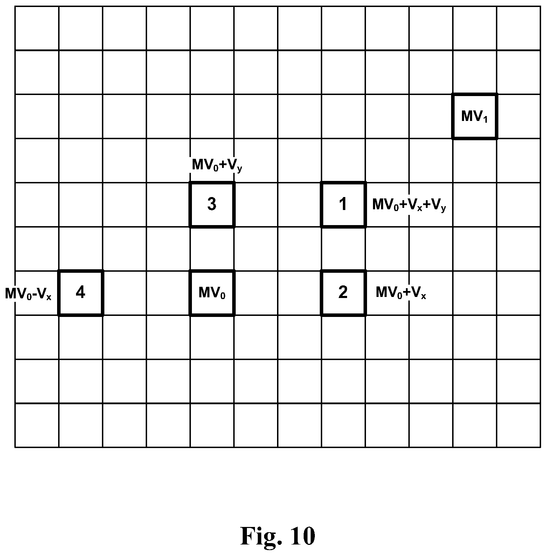

The derived additional MVP candidates according to the above order are shown in Fig. 10.

The above description is presented to enable a person of ordinary skill in the art to practice the present invention as provided in the context of a particular application and its requirement. Various modifications to the described embodiments will be apparent to those with skill in the art, and the general principles defined herein may be applied to other embodiments. Therefore, the present invention is not intended to be limited to the particular embodiments shown and described, but is to be accorded the widest scope consistent with the principles and novel features herein disclosed. In the above detailed description, various specific details are illustrated in order to provide a thorough understanding of the present invention. Nevertheless, it will be understood by those skilled in the art that the present invention may be practiced.

Embodiment of the present invention as described above may be implemented in various hardware, software codes, or a combination of both. For example, an embodiment of the present invention can be a circuit integrated into a video compression chip or program code integrated into video compression software to perform the processing described herein. An embodiment of the present invention may also be program code to be executed on a Digital Signal Processor (DSP) to perform the processing described herein. The invention may also involve a number of functions to be performed by a computer processor, a digital signal processor, a microprocessor, or field programmable gate array (FPGA). These processors can be configured to perform particular tasks according to the invention, by executing machine-readable software code or firmware code that defines the particular methods embodied by the invention. The software code or firmware code may be developed in different programming languages and different formats or styles. The software code may also be compiled for different target platforms. However, different code formats, styles and languages of software codes and other means of configuring code to perform the tasks in accordance with the invention will not depart from the spirit and scope of the invention.

The described examples are to be considered in all respects only as illustrative and not restrictive. The scope of the invention is therefore, indicated by the appended claims rather than by the foregoing description. All changes which come within the meaning and range of equivalency of the claims are to be embraced within their scope.

## Claims

1. A method for three-dimensional video coding or multi-view video coding, the method comprising:
receiving depth data associated with a depth block of a picture, wherein the depth data corresponds to a subset of the depth block;
deriving a disparity vector from the depth data, wherein the subset contains a plurality of depth samples less than an entire depth block ; and
providing the disparity vector for inter-view processing of texture data of the picture,
**characterized in that** the subset corresponds to four corner samples of the depth block.

2. The method of Claim 1, wherein the disparity vector is derived based on maximum, minimum, average, median, most frequent, or linear combination of depth values of the subset.

3. The method of Claim 1, wherein the subset is derived from the depth block using spatial subsampling or cropping.

4. An apparatus for three-dimensional video coding or multi-view video coding, the apparatus comprising:
means for receiving depth data associated with a depth block of a picture, wherein the depth data corresponds to a subset of the depth block;
means for deriving a disparity vector from the depth data, wherein the subset contains a plurality of depth samples less than an entire depth block ; and
means for providing the disparity vector for inter-view processing of texture data of the picture,
**characterized in that** the subset corresponds to four corner samples of the depth block.

5. The method of Claim 1 further comprising:
determining neighboring blocks of a current block corresponding to the depth block;
determining prediction type of a target reference picture;
if the prediction type is temporal prediction, deriving a temporal MVP based on temporal MVs (motion vectors) associated with the neighboring blocks;
if the prediction type is inter-view prediction, determining an inter-view MVP based on interview MVs associated with the neighboring blocks, wherein if one inter-view MV (motion vector) of one neighboring block is unavailable, said one inter-view MV is replaced by the derived disparity vector; and
providing the temporal MVP for MV coding if the prediction type is the temporal prediction and providing the inter-view MVP for said MV coding if the prediction type is the inter-view prediction.

6. The apparatus of Claim 4 is configured to:
determine neighboring blocks of a current block corresponding to the depth block;
determine prediction type of a target reference picture;
if the prediction type is temporal prediction, deriving a temporal MVP based on temporal MVs (motion vectors) associated with the neighboring blocks;
if the prediction type is inter-view prediction, determining an inter-view MVP based on interview MVs associated with the neighboring blocks, wherein if one inter-view MV (motion vector) of one neighboring block is unavailable, said one inter-view MV is replaced by the derived disparity vector; and
providing the temporal MVP for MV coding if the prediction type is the temporal prediction and providing the inter-view MVP for said MV coding if the prediction type is the inter-view prediction.

## Patentansprüche

1. Verfahren zur dreidimensionalen Videokodierung oder Multiview-Videokodierung, wobei das Verfahren umfasst:
Empfangen von Tiefendaten, die einem Tiefenblock eines Bildes zugeordnet sind, wobei die Tiefendaten zu einer Teilmenge des Tiefenblocks korrespondieren;
Erhalten eines Disparitätsvektors aus den Tiefendaten, wobei die Teilmenge eine Vielzahl von Tiefenproben enthält, und die Vielzahl kleiner als ein gesamter Tiefenblock ist; und
Bereitstellen des Disparitätsvektors für die Inter-View-Verarbeitung der Texturdaten des Bildes,
**dadurch gekennzeichnet, dass** die Teilmenge zu vier Eckproben des Tiefenblocks korrespondiert.

2. Verfahren nach Anspruch 1, wobei der Disparitätsvektor auf Basis der maximalen, minimalen, durchschnittlichen, medianen, häufigsten oder linearen Kombination von Tiefenwerten der Teilmenge erhalten wird.

3. Verfahren nach Anspruch 1, wobei die Teilmenge aus dem Tiefenblock mittels räumlicher Teilabtastung oder Beschneidung erhalten wird.

4. Vorrichtung zur dreidimensionalen Videokodierung oder Multiview-Videokodierung, wobei die Vorrichtung umfasst:
Mittel zum Empfangen von Tiefendaten, die einem Tiefenblock eines Bildes zugeordnet sind, wobei die Tiefendaten zu einer Teilmenge des Tiefenblocks korrespondieren;
Mittel zum Erhalten eines Disparitätsvektors aus den Tiefendaten, wobei die Teilmenge eine Vielzahl von Tiefenproben enthält, und die Teilmenge kleiner als ein gesamter Tiefenblock ist; und
Mittel zum Bereitstellen des Disparitätsvektors für die Inter-View-Verarbeitung von Texturdaten des Bildes,
**dadurch gekennzeichnet, dass** die Teilmenge zu vier Eckproben des Tiefenblocks korrespondiert.

5. Verfahren nach Anspruch 1, wobei das Verfahren weiter umfasst:
Bestimmen benachbarter Blöcke eines aktuellen Blocks, korrespondierend zu dem Tiefenblock;
Bestimmen des Vorhersagetyps eines Zielreferenzbildes;
wenn der Vorhersagetyp eine zeitliche Vorhersage ist, Erhalten eines zeitlichen MVP auf der Grundlage von zeitlichen MVs (Bewegungsvektoren), die zu den benachbarten Blöcken korrespondieren;
wenn der Vorhersagetyp eine Inter-View-Vorhersage ist, Bestimmen eines Inter-View-MVP basierend auf Inter-View-MVs, die den benachbarten Blöcken zugeordnet sind, wobei, wenn ein Inter-View-MV (Bewegungsvektor) eines benachbarten Blocks nicht verfügbar ist, wird der Inter-View-MV durch den erhaltenen Disparitätsvektor ersetzt; und
Bereitstellen des zeitlichen MVP für die MV-Kodierung, wenn der Vorhersagetyp die zeitliche Vorhersage ist, und Bereitstellen des Inter-View-MVP für die MV-Codierung, wenn der Vorhersagetyp die Inter-View-Vorhersage ist.

6. Vorrichtung nach Anspruch 4, so konfiguriert um:
benachbarte Blöcke eines aktuellen Blocks zu bestimmen, die zu dem Tiefenblock korrespondieren;
Bestimmung des Vorhersagetyps eines Zielreferenzbildes;
wenn der Vorhersagetyp eine zeitliche Vorhersage ist, Erhalten eines zeitlichen MVP basierend auf zeitlichen MVs (Bewegungsvektoren), die den benachbarten Blöcken zugeordnet sind;
wenn der Vorhersagetyp eine Inter-View-Vorhersage ist, Bestimmen eines Inter-View-MVP basierend auf Inter-View-MVs, die den benachbarten Blöcken zugeordnet sind, wobei, wenn ein Inter-View-MV (Bewegungsvektor) eines benachbarten Blocks nicht verfügbar ist, wird der Inter-View-MV durch den erhaltenen Disparitätsvektor ersetzt; und
Bereitstellen des zeitlichen MVP für die MV-Codierung, wenn der Vorhersagetyp die zeitliche Vorhersage ist, und Bereitstellen des Inter-View-MVP für die MV-Codierung, wenn der Vorhersagetyp die Inter-View-Vorhersage ist.

## Revendications

1. Procédé de codage de vidéo tridimensionnelle ou de codage de vidéo multivue, le procédé comprenant le fait :
de recevoir des données de profondeur associées à un bloc de profondeur d'une image, où les données de profondeur correspondent à un sous-ensemble du bloc de profondeur ;
de dériver un vecteur de disparité des données de profondeur, où le sous-ensemble contient une pluralité d'échantillons de profondeur inférieurs à un bloc de profondeur entier ; et
de fournir le vecteur de disparité pour le traitement inter-vues de données de texture de l'image,
**caractérisé en ce que** le sous-ensemble correspond à des échantillons de quatre coins du bloc de profondeur.

2. Procédé de la revendication 1, dans lequel le vecteur de disparité est dérivé sur la base de la valeur maximale, minimale, moyenne, médiane, la plus fréquente ou d'une combinaison linéaire de valeurs de profondeur du sous-ensemble.

3. Procédé de la revendication 1, dans lequel le sous-ensemble est dérivé du bloc de profondeur en utilisant un recadrage ou un sous-échantillonnage spatial.

4. Appareil pour codage de vidéo tridimensionnelle ou codage de vidéo multivue, l'appareil comprenant :
des moyens pour recevoir des données de profondeur associées à un bloc de profondeur d'une image, où les données de profondeur correspondent à un sous-ensemble du bloc de profondeur ;
des moyens pour dériver un vecteur de disparité des données de profondeur, où le sous-ensemble contient une pluralité d'échantillons de profondeur inférieurs à un bloc de profondeur entier ; et
des moyens pour fournir le vecteur de disparité pour le traitement inter-vues de données de texture de l'image,
**caractérisé en ce que** le sous-ensemble correspond à des échantillons de quatre coins du bloc de profondeur.

5. Procédé de la revendication 1, comprenant en outre le fait :
de déterminer des blocs voisins d'un bloc actuel correspondant au bloc de profondeur ;
de déterminer un type de prédiction d'une image de référence cible ;
si le type de prédiction est une prédiction temporelle, de dériver un prédicteur MVP temporel sur la base des MVs (vecteurs de mouvement) temporels associés aux blocs voisins ;
si le type de prédiction est une prédiction inter-vues, de déterminer un MVP inter-vues sur la base des MVs inter-vues associés aux blocs voisins, où si un MV (vecteur de mouvement) inter-vues d'un bloc voisin est indisponible, ledit MV inter-vues est remplacé par le vecteur de disparité dérivé ; et
de fournir le MVP temporel pour le codage de MV si le type de prédiction est la prédiction temporelle et de fournir le MVP inter-vues pour ledit codage de MV si le type de prédiction est la prédiction inter-vues.

6. Appareil de la revendication 4 est configuré :
pour déterminer des blocs voisins d'un bloc actuel correspondant au bloc de profondeur ;
pour déterminer un type de prédiction d'une image de référence cible ;
si le type de prédiction est une prédiction temporelle, pour dériver un MVP temporel sur la base des MV (vecteurs de mouvement) temporels associés aux blocs voisins ;
si le type de prédiction est une prédiction inter-vues, pour déterminer un MVP inter-vues sur la base des MV inter-vues associés aux blocs voisins, où si un MV (vecteur de mouvement) inter-vues d'un bloc voisin est indisponible, ledit MV inter-vues est remplacé par le vecteur de disparité dérivé ; et
pour fournir le MVP temporel pour le codage de MV si le type de prédiction est la prédiction temporelle et pour fournir le MVP inter-vues pour ledit codage de MV si le type de prédiction est la prédiction inter-vues.
